# EUROPÄISCHE PATENTSCHRIFT

(11) **EP 1 974 594 B1**
(45) Veröffentlichungstag und Bekanntmachung des Hinweises auf die Patenterteilung: **10.06.2009**
(21) Anmeldenummer: 08003410.1
(22) Anmeldetag: 25.02.2008
(51) Int. Cl.: A01B 21/08

(54) **Bodenbearbeitungsmaschine**
Soil processing machine
Machine de traitement de sol

(30) Priorität: 26.03.2007 DE 202007004389 U
(43) Veröffentlichungstag der Anmeldung: 01.10.2008
(73) Patentinhaber: Alois Pöttinger Maschinenfabrik Ges. m.b.H., 4710 Grieskirchen (AT)
(72) Erfinder: Preimess, Hans-Jörg, Dipl.-Ing., 9811 Lendorf (AT); Stadlbauer, Franz, Dipl.-Ing. (FH), 4633 Kematen (AT)
(74) Vertreter: Thoma, Michael

(56) Entgegenhaltungen:
- EP-A- 0 619 937
- EP-A- 1 738 629
- WO-A-20/04026018
- DE-A1- 10 352 295

## Beschreibung

Die vorliegende Erfindung betrifft eine Bodenbearbeitungsmaschine, insbesondere eine Drillmaschine, mit einem Maschinenrahmen, an dem eine Reihe von Bodenbearbeitungswerkzeugen gelagert sind, wobei die Bodenbearbeitungswerkzeuge an Tragarmen befestigt sind, die jeweils mittels eines Tragarmlagers um eine liegende Achse an einem Rahmenträger schwenkbar gelagert sind, wobei zumindest eines der Bodenbearbeitungswerkzeuge durch eine Arbeitstiefeneinstellvorrichtung in seiner Arbeitstiefe relativ zu den übrigen Bodenbearbeitungswerkzeugen einstellbar ist.

Bei Bodenbearbeitungsmaschinen dieser Art, wie beispielsweise Drillmaschinen, werden die Bodenbearbeitungswerkzeuge an Tragarmen aufgehängt, die zum Zwecke der Bodenanpassung um eine liegende Querachse zumindest geringfügig scharnieren können, so dass durch leichte Schwenkbewegungen der Tragarme die Bodenbearbeitungswerkzeuge eine Bodenanpassung erfahren bzw. Hindernissen wie Steinen ausweichen können. Ein relevanter Faktor bei dieser Art der Aufhängung ist hierbei der Bodenanpressdruck, d.h. die Kraft, mit der die Bodenbearbeitungswerkzeuge auf den bzw. in den Boden gedrückt werden bzw. mit welcher Kraft sie einem Nachobenausweichen Widerstand entgegensetzen. Diesbezüglich ist die Aufhängung der Bodenbearbeitungswerkzeuge mittels solcher oftmals von vorne oben schräg nach hinten unten verlaufenden Tragarmen ein feinfühliges System, bei dem die genannte Bodenandruckkraft von einer Mehrzahl von Faktoren, wie beispielsweise der Härte der Gummilager, der Länge der Tragarme oder dem Anstellwinkel der Tragarme zur Vertikalen, abhängen.

Dabei ist es vorteilhaft, wenn die Arbeitstiefe der Bodenbearbeitungswerkzeuge relativ zueinander verändert werden kann. Beispielsweise beschreibt die DE 103 52 295 A1 eine Arbeitstiefeneinstellung der außen an den Rändern der Bearbeitungsbreite der Maschine angeordneten Scheiben einer Egge, die gegenüber den mittleren Scheiben geringfügig höher eingestellt werden können, um eine zu tiefe Bodenbearbeitung am Rand zu vermeiden. Die Tragarme, mittels derer die Scheiben am Maschinenrahmen aufgehängt sind, sind hierbei teleskopierbar ausgebildet, so dass sie aufgrund der schräg geneigten Anordnung der Tragarme eine Längenänderung derselben und eine Arbeitstiefenverstellung bewirkt. Eine ähnlich ausgebildete Scheibenegge beschreibt auch die DE 10 2005 030 923, die es lehrt, eine Seitenscheibe einer Egge über einen teleskopierbaren Tragarm höhenverstellbar auszubilden. Aus der WO 2004/026018 A1 ist weiterhin eine Scheibenegge bekannt, bei der neben einer teleskopierbaren Ausbildung der die Scheiben tragenden Tragarme auch eine Ausführung beschrieben ist, bei der die Tragarme an sich nicht teleskopierbar, sondern im Bereich der Lagerstelle in Längsrichtung der Tragarme verschiebbar gelagert sind, so dass auf diesem Wege die effektive Länge der Tragarme verändert und eine Arbeitstiefeneinstellung bewirkt werden kann.

Verbesserungsfähig ist bei diesen vorbekannten Bodenbearbeitungsmaschinen nach dem Stand der Technik die bei der Arbeitstiefeneinstellung der Werkzeuge auftretende Veränderung der Vorspannverhältnisse, die die Bodenandruckkraft, die Bodenanpassung und das Ausweichen der Bodenbearbeitungswerkzeuge bestimmen.

Hier will die vorliegende Erfindung Abhilfe schaffen. Ihr liegt die Aufgabe zugrunde, eine verbesserte Bodenbearbeitungsmaschine der genannten Art zu schaffen, die Nachteile des Standes der Technik vermeidet und letzteren in vorteilhafter Weise weiterbildet. Insbesondere soll eine Arbeitstiefeneinstellung für die Bodenbearbeitungswerkzeuge relativ zueinander geschaffen werden, die die gewünschten Vorspannverhältnisse unbeeinträchtigt lässt.

Erfindungsgemäß wird diese Aufgabe durch eine Bodenbearbeitungsmaschine gemäß Anspruch 1 gelöst. Bevorzugte Ausgestaltungen der Erfindung sind Gegenstand der abhängigen Ansprüche.

Es wird also eine Arbeitstiefeneinstellung vorgeschlagen, die insbesondere den Anstellwinkel und den Hebelarm der die Bodenbearbeitungswerkzeuge tragenden Tragarme im wesentlichen unbeeinträchtigt lässt. Erfindungsgemäß umfasst die Arbeitstiefeneinstellvorrichtung eine verstellbare Trennstelle zwischen dem Tragarm und dem zugehörigen Tragarmlager, durch die der Tragarm quer zu seiner Längsrichtung gegenüber dem Tragarmlager versetzbar und in mehreren Stellungen feststellbar ist. Die die Tiefeneinstellung ermöglichende Bewegungsachse der Trennstelle besitzt dabei eine Ausrichtung, die der entsprechenden Verstellbewegung an der Trennstelle zumindest eine vertikale Komponente gibt, so dass die Querbewegung des Tragarms zumindest komponentenweise eine Vertikalbewegung des am Tragarm befestigten Werkzeugs bewirkt. Vorteilhafterweise ist die Bewegungsachse der Trennstelle dabei so ausgerichtet, dass im wesentlichen keine Längenänderung des Tragarms und auch keine Änderung des Anstellwinkels des Tragarms auftritt, wenn der Tragarm in eine andere Stellung relativ zu dem Tragarmlager bewegt wird. Hierdurch ändern sich die Hebelverhältnisse des Bodenbearbeitungswerkzeugs bezüglich des Tragarmlagers im wesentlichen nicht, wodurch die Vorspannverhältnisse im wesentlichen dieselben bleiben.

In Weiterbildung der Erfindung ist es besonders vorteilhaft, wenn die bewegliche Trennstelle eine stufenlos bewegbare Schiebeführung aufweist, so dass der Tragarm stufenlos gegenüber dem Tragarmlager verschoben und in jeder gewünschten Stellung des Verschiebebereichs fixiert werden kann. Hierdurch kann eine feine Justage erreicht werden, zudem wird eine ungewollte Schiefstellung des Tragarms nach Lösen der Trennstelle, dem Versetzen des Tragarms und dem Wiederfixieren der Trennstelle in der neuen Stellung vermieden. Die verstellbare Trennstelle kann insbesondere unverschwenkbar ausgebildet sein, so dass der Tragarm relativ zu dem Tragarmlager eine gewünschte, vorbestimmte Schwenkstellung einnimmt. Dies lässt natürlich die Verschwenkbarkeit des Tragarms zum Zwecke der Bodenanpassung des Bodenwerkzeuges, die über die Lagerstelle selbst bewirkt wird, unberührt. Die Nullstellung sozusagen, d.h. die unausgelenkte Ausgangsstellung des Tragarms, ist jedoch durch die unverschwenkbare Ausbildung der verstellbaren Trennstelle vorbestimmt.

In Weiterbildung der Erfindung kann die verstellbare Trennstelle, insbesondere bei Ausbildung als Schiebeführung in der vorgenannten Weise, ein Paar Lagerplatten aufweisen, die vollflächig aufeinander sitzen und in verschiedenen Stellungen aufeinander spannbar sind. Durch das vollflächige Aufliegen der zueinander verstellbaren Lagerplatten können auch größere Momente und Kräfte gut übertragen werden, so dass die verstellbare Trennstelle trotz ihrer in Bezug auf die Hebelverhältnisse an sich ungünstigen Position zwischen Tragarm und Tragarmlager eine hohe Stabilität erhält, die auch dem rauen Betrieb einer Bodenbearbeitungsmaschine widersteht.

Von den beiden Lagerplatten ist eine erste mit dem Tragarmlager vorzugsweise starr verbunden, während die zweite der beiden Lagerplatten mit dem Tragarm vorzugsweise starr verbunden ist. Um die Verstellbarkeit der beiden Lagerplatten zueinander zu ermöglichen, sind lösbare Verbindungsmittel, vorzugsweise Spannmittel beispielsweise in Form von Schraubbolzen, vorgesehen. Die gewünschte Verstellbarkeit könnten dabei dadurch erreicht werden, dass die Schrauben beispielsweise durch Umstecken in verschiedene Löcher und damit die beiden Lagerplatten relativ zueinander versetzt werden können. Vorzugsweise jedoch umfasst zumindest eine der beiden Lagerplatten eine Langlochführung, durch die die beiden Lagerplatten stufenlos in einer vorgegebenen Richtung relativ zueinander verschiebbar sind.

Die Ausrichtung der Lagerplatten oder allgemein die Richtung der Verschiebbarkeit der einstellbaren Trennstelle kann grundsätzlich verschieden ausgebildet sein. Nach einer vorteilhaften Ausführung der Erfindung kann die Versetzbarkeit der beweglichen Trennstelle in einer im wesentlichen aufrechten Ebene liegen. Hierdurch kann eine entsprechende Verstellbewegung an der Trennstelle vollständig in eine Tiefeneinstellbewegung des am Tragarm befestigten Bodenbearbeitungswerkzeugs umgesetzt werden. Gleichzeitig wird ausgehend von der Überlegung, dass die Bodenaufstandskräfte am Bodenbearbeitungswerkzeug in im wesentlichen senkrechter Richtung wirken, der effektive Hebelarm der Bodenaufstandskräfte nicht verändert, so dass sich insgesamt die Hebelverhältnisse der Bodenbearbeitungswerkzeugaufhängung nicht ändern.

Je nach Ausbildung des Bodenbearbeitungswerkzeugs und je nach Anstellwinkel des Tragarms kann es auch vorteilhaft sein, die Richtung der Verstellbarkeit der Trennstelle genau rechtwinklig zu der Längsachse des jeweiligen Tragarms auszurichten. Gegebenenfalls kann die Verstellung des Tragarms bei einer solchen Ausbildung der Trennstelle eine geringfügige Veränderung des Hebelarms der Werkzeugreaktionskräfte bewirken, jedoch kann die Ausbildung der Trennstelle ggf. vereinfacht werden.

Auch wenn grundsätzlich verschiedene Ausrichtungen der Tragarme möglich sind, werden in vorteilhafter Weiterbildung der Erfindung die Tragarme in ihrer Arbeitsstellung zur Vertikalen spitzwinklig geneigt angeordnet, vorteilhafterweise dergestalt, dass sie sich in Fahrtrichtung der Maschine betrachtet von der Tragarmlagerstelle aus schräg nach hinten und unten erstrecken.

Die Trennstelle zur Arbeitstiefeneinstellung der Werkzeuge kann grundsätzlich in verschiedener Weise in die Tragarmlager integriert bzw. an diesen befestigt sein. Nach einer vorteilhaften Ausführung der Erfindung kann das Tragarmlager den Tragrahmen hülsenartig bzw. manschettenförmig umschließenden, wobei die von dem Tragarmlager gebildete Lagerschale durch vorzugsweise nachgiebige Lagerelemente, insbesondere Gummielemente, an dem Profil des Rahmenträgers abgestützt ist. Vorteilhafte!weise wird die genannte Lagerschale dabei von mehreren Lagerschalenteilen gebildet, die durch Verbindungselemente miteinander verbunden sind. An diese die Lagerschalensegmente verbindenden Verbindungselemente ist in Weiterbildung der Erfindung eine Befestigungskonsole angeschlossen, die entweder selbst einen Teil der verstellbaren Trennstelle bildet oder letztere trägt. Insbesondere kann eine etwa bügelförmige Befestigungskonsole an den Schraubbolzen mit angeschraubt sein, die die Lagerschalensegmente der Tragarmlager zusammenhalten. Hierdurch kann eine unmittelbare Krafteinleitung in die Tragarmlager erreicht werden, ohne die Struktur der letzteren zu schwächen. Es versteht sich jedoch, dass grundsätzlich auch andere Befestigungsmöglichkeiten vorgesehen werden können.

Die verstellbare Trennstelle kann hierbei einzelnen Tragarmen oder auch sämtlichen Tragarmen zugeordnet sein, so dass in letzterem Falle alle Bodenbearbeitungswerkzeuge tiefeneinstellbar sind. In Weiterbildung der Erfindung sind insbesondere diejenigen Bodenbearbeitungswerkzeuge, die in einer Reifenspur des Schleppers laufen, vorzugsweise in der zuvor beschriebenen Weise, hinsichtlich ihrer Arbeitstiefe gegenüber den restlichen Bodenbearbeitungswerkzeugen verstellbar ausgebildet. Hierdurch können insbesondere diese in den Schlepperreifenspuren laufenden Bodenbearbeitungswerkzeuge im Vergleich zu den restlichen Bodenbearbeitungswerkzeugen etwas tiefer eingestellt werden, wodurch eine insgesamt zu tief arbeitende Arbeitstiefe der gesamten Bodenbearbeitungsmaschine vermieden werden kann. Alternativ oder zusätzlich können insbesondere auch am Rand der Bearbeitungsbreite der Bodenbearbeitungsmaschine angeordnete Bodenbearbeitungswerkzeuge vorzugsweise in der beschriebenen Art und Weise arbeitstiefeneinstellbar sein.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische, schematische Gesamtansicht einer Bodenbearbeitungsmaschine in Form einer Drillmaschine nach einer vorteilhaften Ausführung der Erfindung, die zwei hintereinander angeordnete Werkzeugreihen aufweist,
- Fig. 2:: eine Heckansicht einer der beiden Werkzeugreihen der Drillmaschine aus Fig. 1, die die Tiefenverstellung der beiden in der Schlepperspur laufenden Bodenbearbeitungswerkzeuge zeigt,
- Fig. 3:: eine vergrößerte, ausschnittsweise Darstellung der Aufhängung eines in der Arbeitstiefe einstellbaren Scheibenpaares, die die verstellbare Trennstelle zwischen dem Werkzeugtragarm und dem Tragarmlager in einer nach unten geschobenen Stellung zeigt,
- Fig. 4:: eine vergrößerte, ausschnittsweise Darstellung der Bodenbearbeitungswerkzeugaufhängung ähnlich Fig. 3, die die verstellbare Trennstelle zwischen Tragarm und Tragarmlager in einer nach oben geschobenen Stellung zeigt.

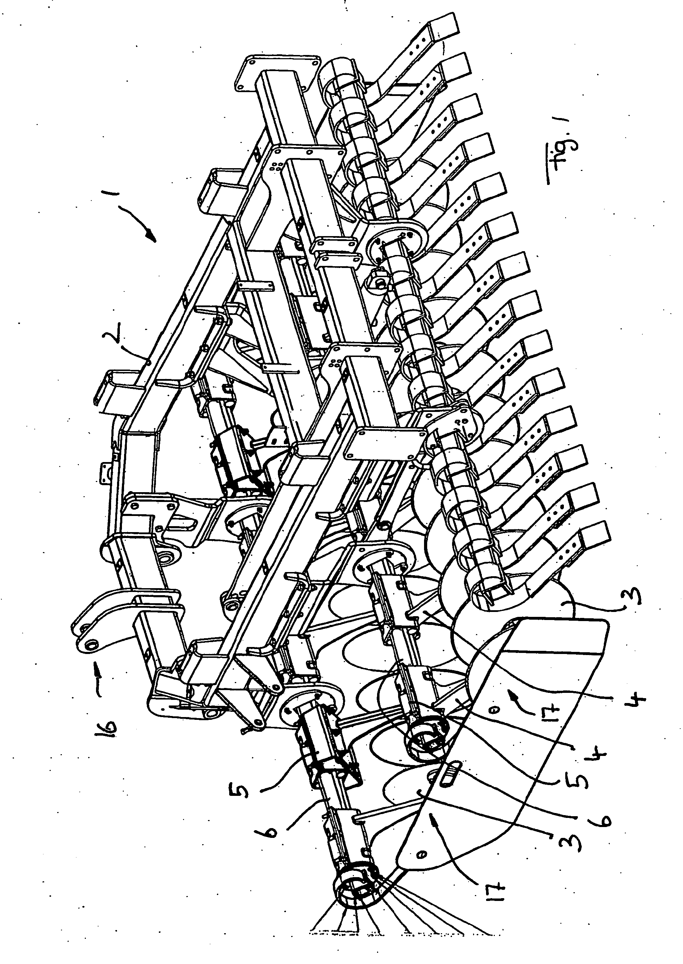

Wie die Figur 1 zeigt, umfasst die Drillmaschine 1 in der gezeichneten Ausführungsform einen zentralen Maschinenrahmen 2, der über Anlenkpunkte 16, beispielsweise in Form einer Dreipunktanlenkung, an einen Schlepper anbaubar oder aber auch mit weiteren Maschinenkomponenten, beispielsweise einer Sämaschine, verbunden werden kann.

An dem Maschinenrahmen 2 sind zwei Werkzeugreihen 17 aufgehängt, die in der gezeichneten Ausführung in Fahrtrichtung hintereinander angeordnet sind. Jede der Werkzeugreihen 17 umfasst dabei eine liegende, quer zur Fahrtrichtung verlaufende Schwenkachse 18, an denen jeweils nebeneinander eine Vielzahl von Werkzeugträgern in Form von Tragarmen 4 gelagert sind, die schräg nach hinten und unten verlaufen und Bodenbearbeitungswerkzeuge 3 tragen, die in der gezeichneten Ausführung in Form von Scharscheiben ausgebildet sind. Die vorgenannten Schwenkachsen 18 werden dabei jeweils von liegenden, quer zur Fahrtrichtung ausgerichteten Rahmenträgern 6 gebildet, die in Form von Profilträgern ausgebildet sein können. Die Tragarme 4 sind an den genannten Rahmenträgern 6 jeweils mittels eines Tragarmlagers 5 gelagert, die die Tragarme 4 relativ zu dem Rahmenträger 6 in einer definierten Ausgangslage halten, jedoch bei übermäßigen Kräften auf die Bodenbearbeitungswerkzeuge 3 Ausweichbewegungen zulassen, indem die Tragarme 4 um den jeweiligen Rahmenträger 6 nach oben schwenken können. Zu diesem Zwecke sind die Tragarmlager 5 nachgiebig ausgebildet.

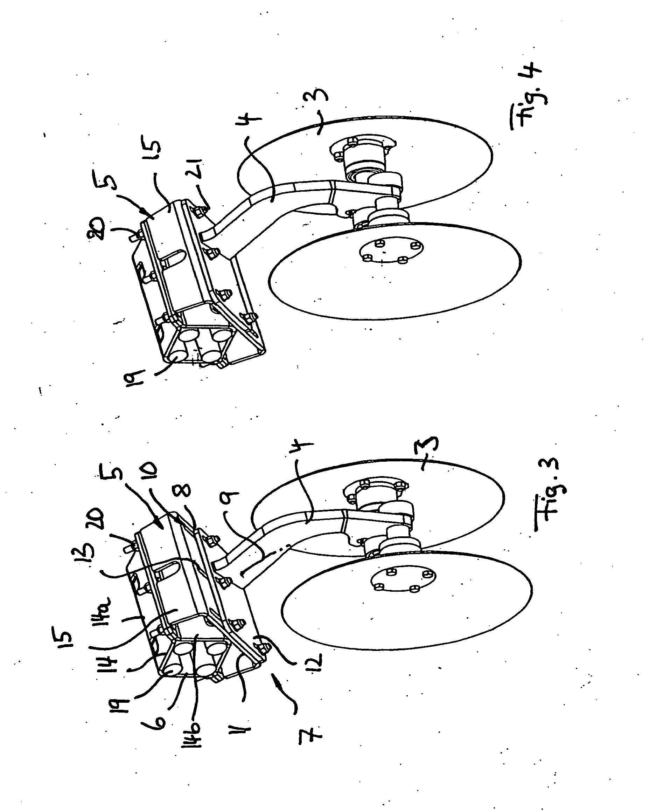

Wie die Figuren 3 und 4 zeigen, umfassen die Tragarmlager 5 jeweils eine Lagerschale 14, die den Rahmenträger 6 manschettenartig umschließt, wobei zwischen der Lagerschale 14 und dem Rahmenträger 6 nachgiebige Lagerelemente in Form von Gummielementen 19 vorgesehen sind, über die sich die Lagerschale 14 an dem von der Kreisform abweichenden Profil des Rahmenträgers 6 abstützt. Unter Verformung der genannten Gummielemente 19 kann deshalb die Lagerschale 14 gegenüber dem Rahmenträger 6 geringfügig verdreht und damit der Tragarm 4 verschwenkt werden.

Wie insbesondere die Figuren 3 und 4 zeigen, ist zwischen den Tragarm 4 und den zugehörigen Tragarmlager 5 eine verstellbare Trennstelle 8 vorgesehen, die eine Arbeitstiefeneinstellvorrichtung 7 für das an dem jeweiligen Tragarm 4 befestigte Bodenbearbeitungswerkzeug 3 bildet. In der gezeichneten Ausführungsform nach den Figuren 3 und 4 umfasst die Trennstelle 8 zwei Lagerplatten 11 und 12, von denen die eine starr an dem Tragarmlager 5 und die andere starr an dem Tragarm 4 befestigt ist, wobei die beiden Lagerplatten 11 und 12 flächig aufeinanderliegen. Die mit dem Tragarmlager 5 verbundene Lagerplatte 11 wird von einer insgesamt betrachtet bügelförmigen Befestigungskonsole 15, genauer gesagt von deren Verbindungsschenkel, gebildet, die an dem Tragarmlager 5 starr angeschraubt ist. Die vorgenannte Lagerschale 14 des Tragarmlagers 5 wird von zwei halbschalenförmigen Lagersegmenten gebildet, die durch Schraubbolzen 20 miteinander verbunden sind. An dieser Nahtstelle der Lagerschale 14 und den genannten Schraubbolzen 20 ist die vorgenannte Befestigungskonsole 15 mit angeschraubt.

Zwischen den beiden Lagerplatten 11 und 12 ist eine Schiebeführung 10 vorgesehen, die es erlaubt, die beiden Lagerplatten 11 und 12 zueinander zu verschieben, wobei in der Langlochführung 13 Spannmittel, insbesondere Schraubbolzen 21, aufgenommen sind, mittels derer die beiden Lagerplatten 11 und 12 in der gewünschten Stellung zueinander festgestellt werden können.

In der gezeichneten Ausführungsform erstreckt sich die Bewegungsebene der beiden Lagerplatten 11 und 12 parallel zu dem Rahmenträger 6 in einer zur lotrechten spitzwinkligen Anordnung, so dass der jeweilige Tragarm 4 quer zu dessen Längsrichtung an dem Tragarmlager 5 beweglich gelagert und in verschiedenen Stellungen feststellbar ist. Die Bewegungsrichtung enthält dabei eine vertikale Komponente, so dass die entsprechende Verschiebung der beiden Lagerplatten 11 und 12 zueinander eine Tiefenverstellung der an dem Tragarm 4 befestigten Bodenbearbeitungswerkzeuge 3 bewirkt.

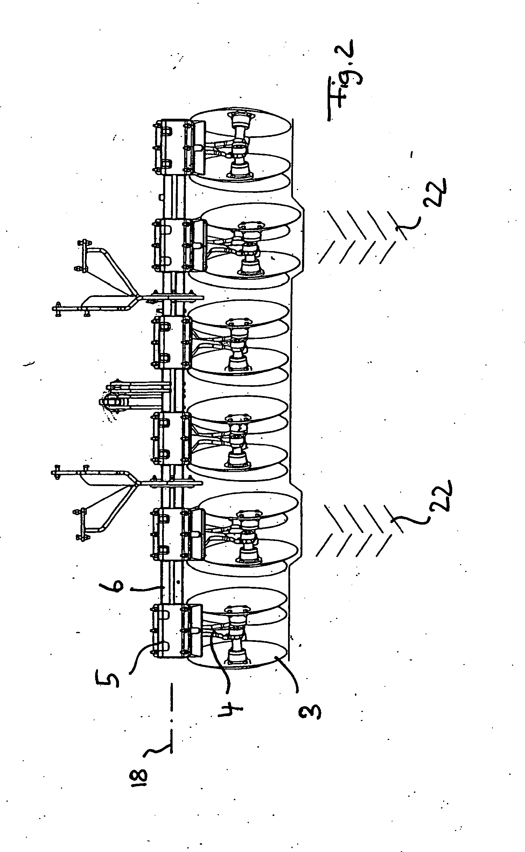

Wie Figur 2 zeigt, sind insbesondere zumindest die Bodenbearbeitungswerkzeuge in der genannten Weise tiefeneinstellbar, die in der Spur 22 eines die Drillmaschine 1 ziehenden Schleppers laufen.

## Patentansprüche

1. Bodenbearbeitungsmaschine, insbesondere Drillmaschine, mit einem Maschinenrahmen (2), an dem eine Reihe von Bodenbearbeitungswerkzeugen (3) gelagert sind, wobei die Bodenbearbeitungswerkzeuge an Tragarmen (4) befestigt sind, die jeweils mittels eines Tragarmlagers (5) um eine liegende Achse an einem Rahmenträger (6) schwenkbar gelagert sind, wobei zumindest eines der Bodenbearbeitungswerkzeuge (3) durch eine Arbeitstiefeneinstellvorrichtung (7) in seiner Arbeitstiefe relativ zu den übrigen Bodenbearbeitungswerkzeugen (3) einstellbar ist, **dadurch gekennzeichnet, dass** die Arbeitstiefeneinstellvorrichtung (7) eine verstellbare Trennstelle (8) zwischen dem Tragarm (4) und dem Tragarmlager (5) aufweist, durch die der Tragarm (4) quer zu seiner Längsrichtung (9) gegenüber dem Tragarmlager (5) versetzbar und in mehreren Stellungen feststellbar ist.

2. Bodenbearbeitungsmaschine nach dem vorhergehenden Anspruch, wobei die verstellbare Trennstelle (8) eine stufenlos bewegbare Schiebeführung (10) aufweist.

3. Bodenbearbeitungsmaschine nach dem vorhergehenden Anspruch, wobei die Schiebeführung (10) ein Paar Lagerplatten (11, 12) aufweist, von denen eine erste mit dem Tragarmlager (5) starr verbunden und von denen eine zweite mit dem Tragarm (4) starr verbunden ist, wobei die Lagerplatten (11, 12) vollflächig aufeinander sitzen und in verschiedenen Stellungen aufeinander spannbar sind.

4. Bodenbearbeitungsmaschine nach dem vorhergehenden Anspruch, wobei zumindest eine der beiden Lagerplatten (11, 12) eine Langlochführung (13) aufweist.

5. Bodenbearbeitungsmaschine nach einem der vorhergehenden Ansprüche, wobei die Versetzbarkeit der verstellbaren Trennstelle (8) in einer im wesentlichen aufrechten Ebene liegt.

6. Bodenbearbeitungsmaschine nach einem der Ansprüche 1 bis 4, wobei die Versetzbarkeit der verstellbaren Trennstelle (8) in einer im wesentlichen zur Längsrichtung (9) des Tragarms (4) senkrechten Ebene liegt.

7. Bodenbearbeitungsmaschine nach einem der vorhergehenden Ansprüche, wobei die Tragarme (4) mit ihren Längsrichtungen (9) zur Vertikalen spitzwinklig geneigt, insbesondere in Fahrtrichtung betrachtet von vorne oben nach hinten unten geneigt, angeordnet sind.

8. Bodenbearbeitungsmaschine nach einem der vorhergehenden Ansprüche, wobei das Tragarmlager (5) eine den Rahmenträger (6) hülsenartig umschließende Lagerschale (14) aufweist, die durch nachgiebige Lagerelemente, vorzugsweise Gummielemente, an dem Profil des Rahmenträgers (6) abgestützt ist und gegenüber dem Rahmenträger (6) verdrehbar ist.

9. Bodenbearbeitungsmaschine nach dem vorhergehenden Anspruch, wobei die Lagerschale (14) aus zwei Halbschalen (14a, 14b) besteht, die durch Verbindungselemente miteinander verbunden sind, wobei an den genannten Verbindungselementen eine Befestigungskonsole (15) befestigt ist, die einen Teil der verstellbaren Trennstelle (8) bildet und/oder die verstellbare Trennstelle (8) trägt.

10. Bodenbearbeitungsmaschine nach einem der vorhergehenden Ansprüche, wobei die Arbeitstiefeneinstellvorrichtung (7) dem zumindest einen Tragarm (4) des zumindest einen Bodenbearbeitungswerkzeugs (3) zugeordnet ist, das in einer Spur eines Rades eines Schleppers läuft, an dem die Bodenbearbeitungsmaschine anbaubar ist.

11. Bodenbearbeitungsmaschine nach einem der vorhergehenden Ansprüche, wobei die Arbeitstiefeneinstellvorrichtung (7) den Tragarmen (4) der am Rand der Bearbeitungsbreite der Bodenbearbeitungsmaschine laufenden Bodenbearbeitungswerkzeugen (3) zugeordnet ist.

## Claims

1. A soil cultivating machine, in particular a seed drill, comprising a machine frame (2) at which a series of soil cultivating tools (3) are supported, wherein the soil cultivating tools are fastened to support arms (4) which are each pivotally journalled around a horizontal axis at a frame carrier (6) by means of a support arm bearing (5), wherein the working depth relative to the other soil cultivating tools (3) of at least one of the soil cultivating tools (3) can be set by a working depth setting apparatus (7), **characterised in that** the working depth setting apparatus (7) has an adjustable disconnection point (8) between the support arm (4) and the support arm bearing (5) by which the support arm (4) is displaceable transversely to its longitudinal direction (9) with respect to the support arm bearing (5) and can be fixed in a plurality of positions.

2. A soil cultivating machine in accordance with the preceding claim, wherein the adjustable disconnection point (8) has a continuously movable slide guidance (10).

3. A soil cultivating machine in accordance with the preceding claim, wherein the slide guidance (10) has a pair of bearing plates (11, 12) of which a first one is rigidly connected to the support arm bearing (5) and of which a second one is rigidly connected to the support arm (4), with the bearing plates (11, 12) being seated over their full area on one another and being clampable to one another in different positions.

4. A soil cultivating machine in accordance with the preceding claim, wherein at least one of the two bearing plates (11, 12) has an elongate hole guidance (13).

5. A soil cultivating machine in accordance with one of the preceding claims, wherein the displaceability of the adjustable disconnection point (8) is disposed in an essentially upright plane.

6. A soil cultivating machine in accordance with one of the claims 1 to 4, wherein the displaceability of the adjustable disconnection point (8) is disposed in a plane essentially perpendicular to the longitudinal direction of the support arm (4).

7. A soil cultivating machine in accordance with one of the preceding claims, wherein the longitudinal directions (9) of the support arms (4) are arranged inclined at an acute angle to the vertical, in particular inclined from the top front to the bottom rear viewed in the direction of travel.

8. A soil cultivating machine in accordance with one of the preceding claims, wherein the support arm bearing (5) has a bearing shell (14) surrounding the frame carrier (6) in the manner of a sleeve, being supported at the section of the frame carrier (6) by yielding bearing elements, preferably rubber elements, and being rotatable with respect to the frame carrier (6).

9. A soil cultivating machine in accordance with the preceding claim, wherein the bearing shell (14) consists of two half-shells (14a, 14b) which are connected to one another by connection elements, with a fastening console (15) being fastened to the said connection elements which forms a part of the adjustable disconnection point (8) and/or supports the adjustable disconnection point (8).

10. A soil cultivating machine in accordance with one of the preceding claims, wherein the working depth setting apparatus (7) is associated with the at least one support arm (4) of the at least one soil processing tool (3) which runs in a track of a wheel of a tractor to which the soil cultivating machine can be attached.

11. A soil cultivating machine in accordance with one of the preceding claims, wherein the working depth setting apparatus (7) is associated with the support arms (4) of the soil cultivating tools (3) running at the margin of the cultivating width of the soil cultivating machine.

## Revendications

1. Machine de traitement de sol, en particulier machine à semer, avec un châssis de machine (2) auquel sont logés une série d'outils de traitement de sol (3), où les outils de traitement de sol sont fixés à des bras de support (4) qui sont logés chacun d'une manière pivotante au moyen d'un palier de bras de support (5) autour d'un axe horizontal à un support de châssis (6), où au moins un des outils de traitement de sol (3) est réglable par un dispositif de réglage de profondeur de travail (7) dans sa profondeur de travail relativement aux outils de traitement de sol restants (3), **caractérisée en ce que** le dispositif de réglage de profondeur de travail (7) présente un emplacement de séparation ajustable (8) entre le bras de support (4) et le palier de bras de support (5), par lequel le bras de support (4) est déplaçable transversalement à sa direction longitudinale (9) par rapport au support de bras de support (5) et peut être fixé dans plusieurs positions.

2. Machine de traitement de sol selon la revendication précédente, où l'emplacement de séparation ajustable (8) présente un guidage coulissant (10) déplaçable en continu.

3. Machine de traitement de sol selon la revendication précédente, où le guidage coulissant (10) présente une paire de plaques de palier (11, 12) dont la première est reliée rigidement au palier de bras de support (5) et dont la seconde est reliée rigidement au bras de support (4), les plaques de palier (11, 12) reposant avec toute la face l'une sur l'autre et peuvent être serrées l'une sur l'autre dans différentes positions.

4. Machine de traitement de sol selon la revendication précédente, où au moins une des deux plaques de palier (11, 12) présente un guidage de trou oblong (13).

5. Machine de traitement de sol selon l'une des revendications précédentes, où le déplacement de l'emplacement de séparation ajustable (8) se situe dans un plan sensiblement vertical.

6. Machine de traitement de sol selon l'une des revendications 1 à 4, où le déplacement de l'emplacement de séparation ajustable (8) se situe dans un plan sensiblement perpendiculaire à la direction longitudinale (9) du bras de support (4).

7. Machine de traitement de sol selon l'une des revendications précédentes, où les bras de support (4) sont disposés avec leurs directions longitudinales (9) selon une inclinaison à angle aigu à la verticale, en particulier considéré dans la direction d'avancement, en étant inclinés de devant en haut vers l'arrière en bas.

8. Machine de traitement de sol selon l'une des revendications précédentes, où le palier de bras de support (5) présente une coque de palier (14) renfermant à la manière d'une douille le support de châssis (6), qui s'appuie par des éléments de palier résiliants, de préférence des éléments en caoutchouc, sur le profilé du châssis de support (6) et qui peut être tourné par rapport au support de châssis (6).

9. Machine de traitement de sol selon la revendication précédente, où la coque de palier (14) est constituée de deux demi-coques (14a, 14b) qui sont reliées par des éléments de liaison l'une à l'autre, où est fixée aux éléments de liaison précités une console de fixation (15) qui forme une partie de l'emplacement de séparation ajustable (8) et/ou qui porte l'emplacement de séparation ajustable (8).

10. Machine de traitement de sol selon l'une des revendications précédentes, où le dispositif de réglage de profondeur de travail (7) est associé à au moins un bras de support (4) du au moins un outil de traitement de sol (3), qui passe dans une trace d'une roue d'un tracteur auquel peut être rapportée la machine de traitement de sol.

11. Machine de traitement de sol selon l'une des revendications précédentes, où le dispositif de réglage de profondeur de travail (7) est associé aux bras de support (4) des outils de travail de sol passant au bord de la largeur de traitement de la machine de traitement de sol.
